# EUROPEAN PATENT APPLICATION

(11) **EP 4 468 059 A1**
(43) Date of publication of application: **27.11.2024**
(21) Application number: 23739850.8
(22) Date of filing: 04.01.2023
(51) Int. Cl.: G02B 27/01

(54) **VR OPTICAL SYSTEM**

(30) Priority: 17.01.2022 CN 202210050795
(71) Applicant: Huizhou TCL Mobile Communication Co., Ltd., Huizhou, Guangdong 516006 (CN)
(72) Inventor: WANG, Liliang, HuiZhou, Guangdong 516006 (CN); YU, Yang, HuiZhou, Guangdong 516006 (CN)
(74) Representative: Murgitroyd & Company
(86) International application number: PCT/CN2023/070255
(87) International publication number: WO 2023/134506

(57) **Abstract**

An VR optical system. The VR optical system comprises an optical path folding module (300), and a first light-emitting assembly (100) and a second light-emitting assembly (200) which are arranged on peripheral sides. The first light-emitting assembly (100) emits in a first direction a first optical image towards the optical path folding module (300), the first optical image being emitted in a third direction to an imaging area. The second light-emitting assembly (200) emits in a second direction a second optical image towards the optical path folding module (300), the second optical image being emitted in a fourth direction to the imaging area and coinciding with the first optical image in the imaging area.

## Description

This application claims priority to Chinese Application No. 202210050795.1, entitled "VR optical system", filed on January 17, 2022. The entire disclosures of the above applications are incorporated herein by reference.

### FIELD OF THE INVENTION

The present disclosure relates to the technical field of virtual reality display devices, in particular to a Virtual Reality optical system.

### BACKGROUND

Virtual Reality (VR) technology is a new practical technology developed in the 20th century. The virtual reality technology includes computer, electronic information, and simulation technology, and its basic implementation is that a computer simulates virtual environment to give people a sense of environmental immersion.

There are two main optical solutions used in existing VR devices. One is the Fresnel single lens solution, which is low in cost but as low imaging clarity and a long total optical length. The other is the folded ultra-short focus optical path, which reduces the total optical length by about half compared to the Fresnel single lens solution. However, due to the optical system, the light utilization rate of the folded ultra-short focus optical path is less than 20%, so the projection brightness thereof is lower, about 25% of the Fresnel single lens solution.

### SUMMARY

### Technical problem

At present, the field angle of view of each of the above two schemes is 90-100 degrees, and the PPD (the number of pixels per degree) is within 20, which still causes a gap from the limit of 50 for the human eye, so a serious sense of graininess is induces to the human eye. In addition, due to the current LCD screen arrangement and the BM (black matrix inside the liquid crystals) region, the emitted light which is amplified by the VR optical system can be clearly perceived by the human eye, so that the human eye can feel the screen door effect.

### Solution to technical problem

### Technical solution

An embodiment of the present disclosure provides a VR optical system, comprising:
an optical path folding module, and a first light-emitting component and a second light-emitting component arranged on periphery sides of the optical path folding module;
the first light-emitting component emitting a first optical image along a first direction toward the optical path folding module, and the second light-emitting component emitting a second optical image along the second direction toward the optical path folding module; the first optical image being emitted to an imaging region from the optical path folding module along the third direction, and the second optical image being emitted to the imaging region from the optical path folding module along the fourth direction and overlapping with the first optical image in the imaging region;
a first included angle being between the first direction and the second direction, and a second included angle being between the third direction and the fourth direction;
the optical path folding module being configured to change a degree of the second included angle by adjusting a degree of the first included angle, thereby adjusting an overlapping region of the first optical image and the second optical image.

### Beneficial effect of present disclosure

### Advantageous effect

The VR optical system provided by the embodiment of the present disclosure emits a first optical image by the first light-emitting component along the first direction toward the optical path folding module, and the first optical image is emitted to the imaging region from the optical path folding module along the third-party direction. The second optical image is emitted by the second light-emitting component along the second direction toward the optical path folding module, and the second optical image is emitted to the imaging region from the optical path folding module along the fourth direction and overlaps with the first optical image in imaging region. The optical path folding module is configured to control the degree of the second included angle between the third direction and the fourth direction by changing the first included angle between the first direction (i.e., the position of the first light-emitting component) and the second direction (i.e., the position of the second light-emitting component) thereby changing the overlapping region of the first optical image and the second optical image, so that, the BM region of the first optical image can overlap with the pixel array of the second optical image in the development area. Through superimposing the pixels of the second pixel array of the optical image on the first BM region of the first optical image, the continuity of the BM region of the first optical image is blocked, and the area of the overall visible BM region of the displayed image is reduced, thereby significantly improving the screen door effect. When the pixel array of the second optical image overlaps with the BM region of the first optical image, the area occupied by the pixels in the same display area is increased, so that the resolution and brightness of the displayed images are improved. Therefore, compared with the prior art, the VR optical system provided by the present disclosure can reduce the screen door effect and improve the display effect of displaying images.

### BRIEF DESCRIPTION OF THE DRAWINGS

### Description of the drawings

Fig. 1 is a schematic diagram of a structure of a VR optical system according to an embodiment of the present disclosure (a folding module);
Fig. 2 is a schematic diagram of a structure of ae VR optical system according to an embodiment of the present disclosure (an optical path beam-combining module and a phase delay reflection module);
Fig. 3 is a schematic diagram of a structure of a phase delay reflection module structure according to an embodiment of the present disclosure;
Fig. 4 is a schematic diagram of a structure of an optical path beam-combining module according to an embodiment of the present disclosure;
Fig. 5 is a schematic diagram of an enlargement structure of a first optical image according to an embodiment of the present disclosure;
Fig. 6 is a schematic diagram of an enlargement structure of a second optical image enlargement structure according to embodiment of the present disclosure;
Fig. 7 is a schematic diagram of an overlapping structure of a first BM region and a second pixel array according to an embodiment of the present disclosure;
Fig. 8 is a schematic diagram of a structure of a folding module according to an embodiment of the present disclosure (polarizing beam splitting film).

### EMBODIMENT OF THE PRESENT DISCLOSURE

### Detailed description of the present disclosure

The technical solutions in the embodiments of the present disclosure will be clearly and completely described below in conjunction with the accompanying drawings in the embodiments of the present disclosure, and it is obvious that the described embodiments are only part of the embodiments of the present disclosure, not all embodiments. Based on the embodiments in the present disclosure, all other embodiments obtained by a person skilled in the art without making creative labor belong to the scope of protection of the present disclosure.

It should be noted that all directional indications in the embodiments of the present disclosure (such as up, down, left, right, front, rear...... ) is only used to explain the relative position relationship between the parts under a specific attitude (as shown in the attached drawing), the movement, etc., and if the specific attitude changes, the directional indication will change accordingly.

In the present disclosure, unless otherwise expressly specified or qualified, the terms "connected", "fixed", etc., shall be construed broadly, for example, "fixed" may be a fixed connection, a detachable connection, or a whole. It can be mechanically or electrically connected. It can be directly connected or indirectly connected by an intermediate medium, it may be an internal connection between two elements or an interaction between two elements, unless otherwise expressly specified. For a person of ordinary skill in the art, the specific meaning of the above terms in the present disclosure may be understood according to the specific circumstances.

In addition, if there are descriptions involving "first", "second", etc., in the embodiments of the present disclosure, the terms "first", "second", etc., are only for the purpose of description, and cannot be construed as indicating or implying their relative importance or implying the number of technical features indicated. Thus, defining the "first" and "second" features may explicitly or implicitly include at least one of those features. In addition, the meaning of "and/or" in the full text includes three parallel scenarios, taking "A and/or B" as an example, including the A option, or the B option, or the scheme where A and B meet both requirements. In addition, the technical solutions between the various embodiments may be combined with each other, but they must be based on those who are skilled in the art and can be realized, and when the combination of technical solutions is contradictory or impossible to realize, it shall be deemed that the combination of such technical solutions does not exist and is not within the scope of protection claimed by the present disclosure.

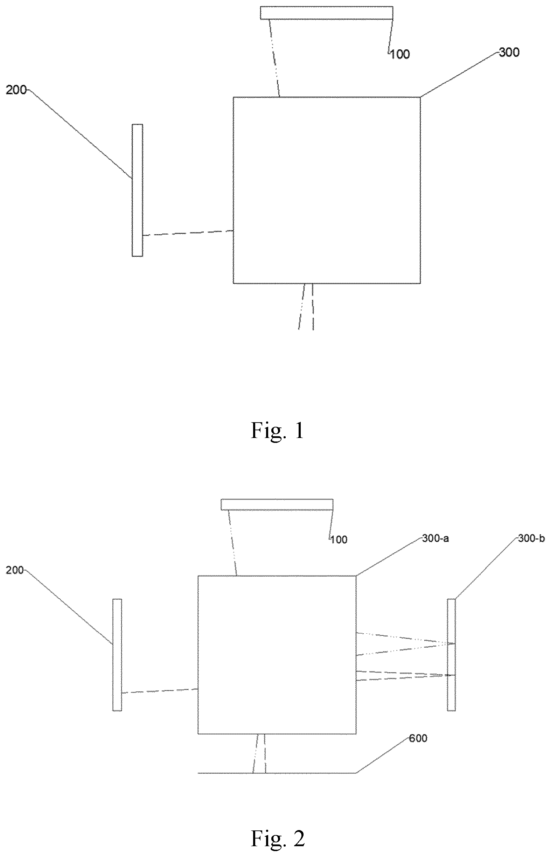

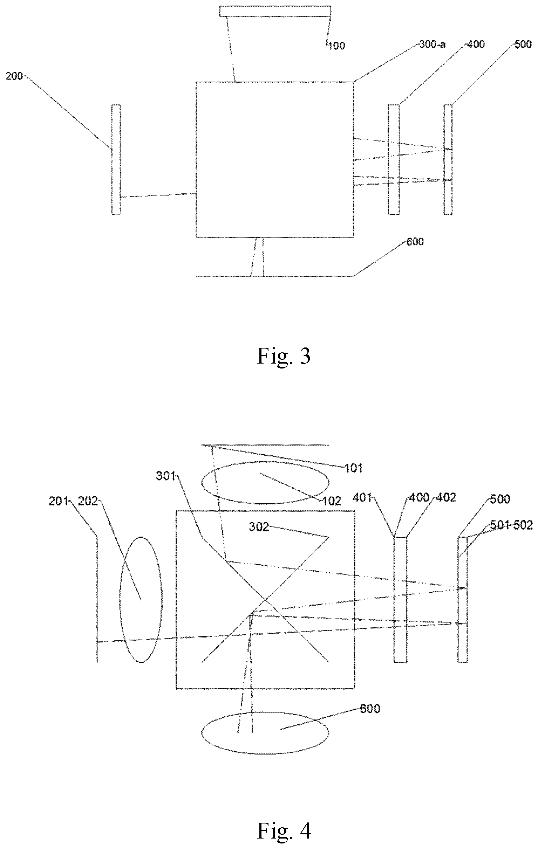

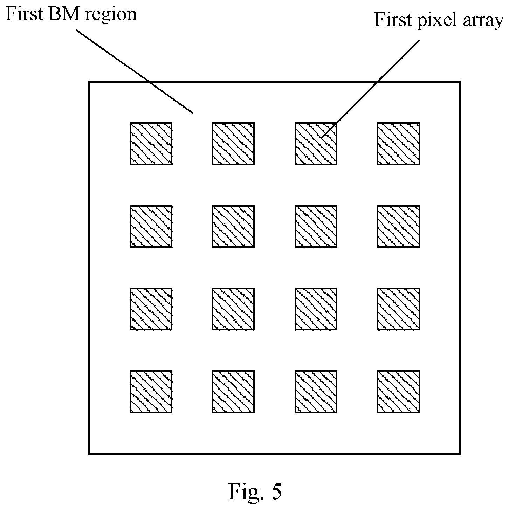

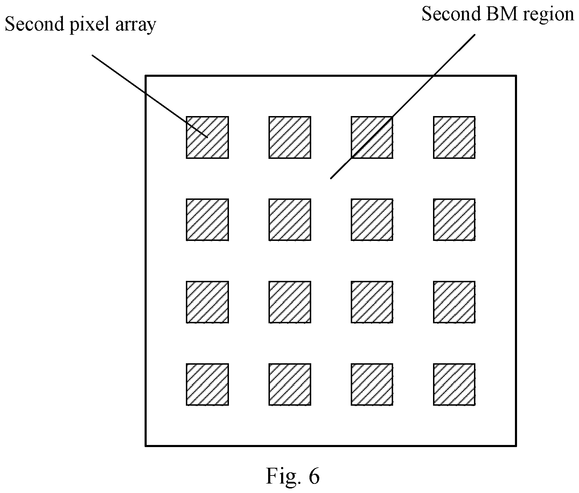

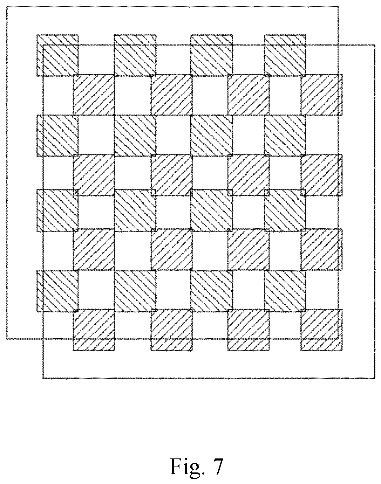

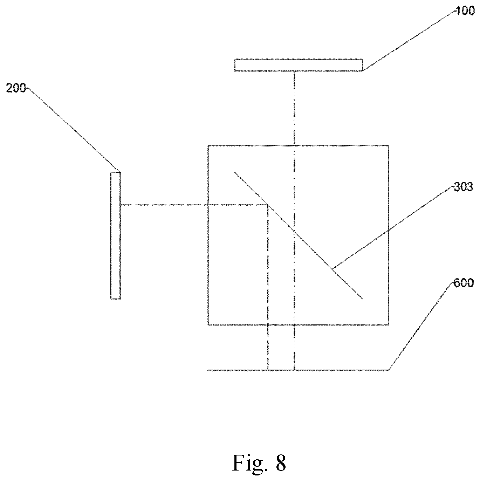

As shown in Fig. 1-Fig. 8, the present disclosure provides an VR optical system, comprising an optical path folding module 300, a first light-emitting component 100 and a second light-emitting component 200. The first light-emitting component 100 and the second light-emitting component 200 are arranged on the peripheral sides of the optical path folding module 300. The first light-emitting component 100 emits a first optical image along a first direction toward the optical path folding module 300, and the first optical image is emitted to an imaging region from the optical path folding module 300 along a third- direction. The second light-emitting component 200 emits a second optical image toward the optical path folding module 300 along a second direction, and the second optical image is emitted to the imaging region from the optical path folding module 300 along a fourth direction. The first optical image overlaps with the second optical image overlap in the imaging region.

There is a first included angle between the first direction and the second direction, and the first included angle is greater than 0° and less than 180°. There is a second included angle between the third direction and the fourth direction, and the second included angle is greater than or equal to 0° and less than 180°;

The optical path folding module 300 is configured to change the degree of the second included angle by adjusting the degree of the first included angle, thereby adjusting the overlapping region of the first optical image and the second optical image.

A BM region of the first optical image is referred to as a first BM region, a pixel array of the first optical image is referred to as a first pixel array, a BM region of the second optical image is referred to as a second BM region, and a pixel array of the second optical image is referred to as a second pixel array.

It is understandable that the first optical image is emitted by the first light-emitting component 100 along the first direction toward the optical path folding module 300, so that the first optical image is emitted to the imaging region from the optical path folding module 300 along the third direction. T the second optical image is emitted by the second light-emitting component 200 along the second direction toward the optical path folding module 300, so that the second optical image is also emitted to the imaging region from the optical path folding module 300 along the fourth direction. Through changing the first included angle between the first direction and the second direction (i.e., changing the positions of the first light-emitting component 100 and the second light-emitting component 200) or changing the state of the optical path folding module 300, the degree of the second included angle between the third direction and the fourth direction is controlled, so that the first BM region of the first optical image overlaps with the second pixel array of the second optical image in the imaging region. Through superimposing the pixels of the second pixel array on the first BM region, the continuity of the first BM area is blocked, and the area of the overall visible BM is reduced, thereby significantly improving the screen door effect. When the second pixel array overlap with the first BM region, the number of pixels in the same display region is increased, so that the resolution and brightness of the displayed images are improved. Therefore, compared with the prior art, the VR optical system provided by the present disclosure can reduce the screen door effect and improve the display effect of displaying images.

It should be noted that adjusting the degree of the second included angle is essentially to change the orientation of the third direction and the fourth direction, thereby changing the projection positions of the first optical image and the second optical image in the imaging region. Because the third direction and the fourth direction are the emission directions of the first optical image and the second optical image from the optical path folding module 300 respectively, the factors that can affect the degree of the second included angle at least include the position of the first light-emitting component 100, the position of the second light-emitting component 200 and the structure of the optical path folding module 300. Ther degree of the second included angle can be changed by adjusting any one of the above factors.

It is understandable that the degree of the overlapping between the first BM region and the second pixel array needs to be adjusted according to the actual needs.

In another embodiment of the present disclosure, the degree of the second included angle may be changed by changing the structure of the optical path folding module 300, so that the first BM region overlaps with the second pixel array in the imaging region.

In one embodiment of the present disclosure, when the light polarization direction of the first light-emitting component 100 is the same as the light polarization direction of the second light-emitting component 200, the degree of the first included angle is 90, and the optical path folding module 300 comprises an optical path beam-combining module 300-a and a phase delay reflection module 300-b. The second light-emitting component 200, the optical path beam-combining module 300-a and the phase delay reflection module 300-b are arranged sequentially along the second direction;
After the first optical image is emitted to the optical path folding module 300, the first optical image is first emitted through the optical path beam-combining module 300-a, then emitted by the optical path beam-combining module 300-a to the phase delay reflection module 300-b, emitted to optical path beam-combining module 300-a after its polarization direction is changed by the phase delay reflection module 300-b, and finally emitted by the optical path beam-combining module 300-a to the imaging region along the third direction.

After the second optical image is emitted to the optical path folding module 300, the second optical image is first emitted through the optical path beam-combining module 300-a, then emitted by the optical path beam-combining module 300-a to the phase delay reflection module 300-b, emitted to the optical path beam-combining module 300-a after its polarization direction is changed by the phase delay reflection module 300-b, and finally emitted by the optical path beam-combining module 300-a to the imaging region area along the fourth direction.

The changed polarization direction of the first optical image is perpendicular to its original polarization direction. The changed polarization direction of the second optical image is perpendicular to its original polarization direction.

The optical path beam-combining module 300-a comprises a reflective polarizing film 302 and a semi-transparent semi-reflective film 301 which are arranged perpendicular to each other and crossed, the semi-transparent semi-reflective film 301 is arranged along the angular bisector of the first included angle, and the transmission axis of the reflective polarizing film 302 is parallel to the polarization directions of the first optical image and the second optical image.

The light polarization direction of the first light-emitting component 100 is the polarization direction of the first optical image when the first light-emitting component emits the first optical image. The light polarization direction of the second light-emitting component 200 is the polarization direction of the second optical image when the second light-emitting component emits the second light-emitting image.

When the first included angle is 90°, the first direction and the second direction are perpendicular to each other. The semi-transparent semi-reflective film 301 is arranged along the angular bisector of the first included angle. The reflective polarizing film 302 and the semi-transparent semi-reflective film 301 are arranged perpendicular to each other and crossed. The first optical image which is emitted to the optical path beam-combining module 300-a along the first direction is reflected by the semi-transparent semi-reflective film 301 to the phase delay reflection module 300-b, reflected back to the optical path beam-combining module 300-a after the polarization direction is changed by the phase delay reflection module 300-b, and then reflected by the reflective polarizing film 302 and emitted along the third direction out of the optical path beam-combining module 300-a. The second optical image which is emitted to the optical path beam-combining module 300-a along the second direction is transmitted through the reflective polarizing film 302 toward the phase delay reflection module 300-b, reflected back to the optical path beam-combining module 300-a after the polarization direction is changed by the phase delay reflection module 300-b, and then reflected by the reflective polarizing film 302 and emitted along the fourth direction out of the optical path beam-combining module 300-a.

Since the original polarization direction of the first optical image and the original polarization direction of the second optical image are parallel to the transmission axis of the reflective polarizing film 302, the first optical image and the second optical image can be emitted through the reflective polarizing film 302 and emitted to the phase delay reflection module 300-b. The polarization directions changed by the phase delay reflection module 300-b are perpendicular to the original polarization directions, that is, the first optical image and the second optical image emitted with the changed polarization directions cannot be emitted through the reflective polarizing film 302, but only reflection can be occurred on the reflective polarizing film 302, that is, the first optical image and the second optical image after the polarization directions are changed are reflected on the reflective polarizing film 302 and then emitted along the third and fourth directions respectively.

Optionally, the transmittance and reflectivity of the semi-transparent semi-reflective film 301 are 50% respectively. It can be understood that the VR optical system in the present disclosure can choose the semi-transparent semi-reflective film 301 with the transmittance and reflectivity having other values according to actual use.

Optionally, the orthographic projection area of the semi-transparent semi-reflective film 301 in the first direction is equal to the orthographic projection area of the reflective polarizing film 302 in the first direction.

The orthographic projection area of the semi-transparent semi-reflective film 301 in the second direction is equal to the orthographic projection area of the reflective polarizing film 302 in the second direction.

The orthographic projection areas of the semi-transparent semi-reflective film 301 in the first direction and the second direction are equal to the orthographic projection areas of the reflective polarizing film 302 in the first direction and the second direction, which can ensure the integrity of the first optical image and the second optical image in the process of passing through the optical path beam-combination module 300-a, that is, ensure that there is not massing of the first optical image and the second optical image when they are displayed in the imaging region.

As an optional implementation of the above embodiment, the orthographic projection areas of the semi-transparent semi-reflective film 301 and the reflective polarizing film 302 in the first direction are equal to the light-emitting area of the first light-emitting component 100. It can be understood that the above areas are equal, which can ensure that the optical path beam-combining module 300-a can fully receive the first optical image and ensure the integrity of the first optical image.

Optionally, the orthographic projection areas of the semi-transparent semi-reflective film 301 and the reflective polarizing film 302 in the second direction are equal to the light-emitting area of the second light-emitting component 200. It can be understood that the three areas are equal, which can ensure that the optical path beam-combining module 300-a can fully receive the second optical image and ensure the integrity of the second optical image.

Optionally, the phase delay reflection module 300-b comprises a phase delayer 400 and a third lens 500 arranged at an interval with the phase delayer 400. The phase delayer 400 is arranged between the third lens 500 and the optical path beam-combining module 300-a. The optical surface of the third lens 500 away from the phase delayer 400 is provided with a reflective film for reflecting the light beams, which are emitted to the third leans 500 from the phase delayer 400, back to the phase delayer 400.

Specifically, the third lens 500 has a first optical surface 501 and a second optical surface 502. The first optical surface 501 and the second optical surface 502 are parallel to the optical surface of the phase delayer 400, wherein the optical surface of the third lens 500 close to the phase delayer 400 is the first optical surface 501, the optical surface away from the phase delayer 400 is the second optical surface 502. The second optical surface 502 is provided with a reflective film. A reflective film is arranged on the second optical surface 502. The third lens 500 is used to amplify an optical image emitted through the phase delayer 400 and reflect it back to the phase delayer 400.

Optionally, the phase delayer 400 comprises a phase delayer 400 arranged on one side of the optical path beam-combining module 300-a and a reflective film attached to the optical surface of the phase delayer 400 far away from the optical path beam-combining module 300-a.

The phase delayer 400 comprises a third optical surface 401 and a fourth optical surface 402 which are parallel to each other. The third optical surface 401 is close to the optical path beam-combining module 300-a. The fourth optical surface 402 is far away from the optical path beam-combining module 300-a. A reflective film is arranged on the fourth optical surface 402 for reflecting the optical image, which has been changed by the phase delayer 400, back to the optical path beam-combining module 300-a.

Optionally, the reflective film arranged on the second optical surface 502 or the reflective film arranged on the fourth optical surface 402 is replaced with a reflective coating.

Optionally, when the polarization direction of the first optical image is perpendicular to the polarization direction of the second optical image, the first included angle is greater than 0° and less than or equal to 90°, and the optical path folding module 300 is a polarizing beam splitting film 303 arranged along the angular bisector of the first included angle;
The transmission axis of the polarizing beam splitting film 303 is parallel to the polarization direction of the first optical image; or
The transmission axis of the polarizing beam splitting film 303 is parallel to the polarization direction of the second optical image.

An optical image whose polarization direction is parallel to the transmission axis of the polarizing beam splitter film 303 directly passes through the polarizing beam splitter film 303. An optical image whose polarization direction is perpendicular to the transmission axis of the polarizing beam splitter film 303 is reflected on the polarizing beam splitter film 303.

If the polarization direction of the first optical image is parallel to the transmission axis of the polarizing beam splitter film 303, the first optical image directly passes through the polarizing beam splitter film 303 and is emitted out of the optical path folding module 300 along the third direction. At this time, the first direction and the third direction are the same direction.

If the polarization direction of the second optical image is parallel to the transmission axis of the polarizing beam splitter film 303, the second optical image directly passes through the polarizing beam splitter film 303 and is emitted out of the optical path folding module 300 along the fourth direction. At this time, the second direction and the third direction are the same direction.

In an embodiment of the present disclosure, the first light-emitting component 100 comprises a first light-emitting surface 101 and a first lens 102 parallel to the first light-emitting surface 101, which are sequentially arranged along the first direction.

The second light-emitting component 200 comprises a second light-emitting surface 201 and a second lens 202 parallel to the second light-emitting surface 201, which are arranged sequentially in the second direction.

The first lens 102 and the second lens 202 are arranged to amplify the first optical image and the second optical image, and the first light-emitting surface 101 and the second light-emitting surface 201 can be straight or curved surfaces.

Optionally, a fourth lens 600 is also arranged between the optical path folding module 300 and the imaging region. The first optical image and the second optical image are transmitted through the fourth lens 600 and then reach the imaging region.

The fourth lens 600 is parallel to the imaging plane formed by the imaging region and is used to amplify the first optical image and the second optical image emitted to the imaging region.

Optionally, the VR optical system comprises a first light-emitting surface, a first lens 102 parallel to the first light-emitting surface, a second light-emitting surface perpendicular to the first light-emitting surface, a second lens 202 parallel to the second light-emitting surface. The first light-emitting surface emits a first optical image along the first direction, and the second light-emitting surface emits a second optical image along the second direction, wherein the polarization directions of the first optical image and the second optical image are the same. The VR optical system further comprises an optical path beam-combing module 300-a, a phase delayer 400 and a third lens 500, wherein the first light-emitting surface and the first lens 102 are arranged on one side of the optical path beam-combing module 300-a, the second light-emitting surface and the second lens 202 are arranged on another side of the optical path beam-combing module 300-a. The second light-emitting surface, the second lens 202, the optical path beam-combing module 300-a, the phase delayer 400 and the third lens 500 are arranged sequentially along the second direction. T the third lens 500 comprises a first optical surface 501 and a second optical surface 502 which are parallel to each other. The first optical surface 501 is close to the phase delayer 400, and the second optical surface 502 is far away from the phase delayer 400. The second optical surface 502 is provided with a reflective film for reflecting optical images. The optical path beam-combining module 300-a comprises a reflective polarizing film 302 and a semi-transparent semi-reflective film 301 arranged perpendicular to each other and crossed. The semi-transparent semi-reflective film 301 is arranged along the angular bisector of the included angle between the first direction and the second direction. The transmission axis of the reflective polarizing film 302 is parallel to the polarization directions of the first optical image and the second optical image. A fourth lens 600 is arranged between the optical path beam-combining module 300-a and the imaging region.

After the first optical image is emitted to the optical path beam-combing module 300-a, it is emitted to the phase delayer 400 by the optical path beam-combining module 300-a. The first optical image is emitted to the third lens 500 after its polarization direction is changed by the phase delayer 400, and then reflected back to the optical path beam-combing module by the reflective film on the second optical surface 502. Finally, the first optical image is emitted to the imaging region from the optical path beam-combing module 300-a along the third direction;
After the second optical image is emitted to the optical path beam-combing module 300-a, it is emitted to the phase delayer 400 by the optical path beam-combining module 300-a. The second optical image is emitted to the third lens 500 after its polarization direction is changed by the phase delayer 400, and then reflected back to the optical path beam-combing module by the reflective film on the second optical surface 502. Finally, the second optical image is emitted to the imaging region from the optical path beam-combining module 300-a along the fourth direction.

The embodiment adopts a folding optical path without changing the total optical length, increases the optical path lengths of the first optical image and the second optical image, and amplifying the first optical image and the second optical image three times through the lenses, which greatly improves the field angle of view of the first optical image and the second optical image.

As a practical application of the above-mentioned embodiments, the first lens 102 and the second lens 202 respectively adopt lenses of different optical focuses to form two optical images of different FOV for transmission. The degree of the second included angle is adjusted to cause that the first optical image overlaps with the second optical image in the imaging region, and further cause that the final imaging image presents a small FOV and high PPD image in the central region and a larger FOV and low PPD image in the outer region, thereby ensuring that the main viewing area of the human eye has higher clarity.

Optionally, the first lens 102, the second lens 202, the third lens 500 and the fourth lens 600 all adopt double-sided convex lenses to amplify the first optical image and the second optical image.

The VR optical system provided by the present disclosure can be applied to a variety of VR display devices, including but not limited to head-mounted VR glasses, VR picture screens, etc., because the VR display equipment adopts part or all of the technical solutions of the above embodiments, so at least all the beneficial effects brought by the technical solutions of the above embodiments are not repeated herein.

The above is only an optional embodiment of the present disclosure, and does not limit the scope of the patent of the present disclosure, and all equivalent structural transformations made by using the contents of the description and drawings of the present disclosure under the invention conception, or directly or indirectly used in other related technical fields are included in the patent protection scope of the present disclosure.

## Claims

1. A Virtual Reality, VR, optical system, comprising:
an optical path folding module, and a first light-emitting component and a second light-emitting component arranged on periphery sides of the optical path folding module, **characterized in that** the first light-emitting component emitting a first optical image along a first direction toward the optical path folding module, and the second light-emitting component emitting a second optical image along the second direction toward the optical path folding module; the first optical image is emitted to an imaging region from the optical path folding module along the third direction, and the second optical image is emitted to the imaging region from the optical path folding module along the fourth direction and overlapping with the first optical image in the imaging region;
a first included angle is between the first direction and the second direction, and a second included angle is between the third direction and the fourth direction;
the optical path folding module is configured to change a degree of the second included angle by adjusting a degree of the first included angle, thereby adjusting an overlapping region of the first optical image and the second optical image.

2. The VR optical system according to claim 1, wherein when a light polarization direction of the first light-emitting component is the same as a light polarization direction of the second light-emitting component, the optical path folding module comprises an optical path beam-combining module and a phase delay reflection module; the first optical image being emitted to the optical path beam-combining module along the first direction, emitted to the phase delay reflection module by the optical path beam-combining module, emitted to the optical path beam-combining module by the phase delay reflection module, and finally emitted to the imaging region from the optical path beam-combining module along the third direction;
the second optical image is emitted to the optical path beam-combining module along the second direction, emitted to the phase delay reflection module by the optical path beam-combining module, emitted to the optical path beam-combining module by the phase delay reflection module, and finally emitted to the imaging region from the optical path beam-combining module along the fourth direction.

3. The VR optical system according to claim 2, wherein a changed polarization direction of the first optical image is perpendicular to an original polarization direction of the first optical image, and a changed polarization direction of the second optical image is perpendicular to an original polarization direction of the second optical image.

4. The VR optical system according to claim 2, wherein the optical path beam-combining module comprises a reflective polarizing film and a semi-transparent semi-reflective film perpendicular to each other and crossed, the semi-transparent and semi-reflective film is arranged along an angular bisector of the first included angle, and a transmission axis of the reflective polarizing film is parallel to the light polarization direction of the first light-emitting component.

5. The VR optical system according to claim 4, wherein an orthographic projection region of the semi-transparent semi-reflective film in the first direction is equal to an orthographic projection area of the reflective polarizing film in the first direction;
an orthographic area of the semi-transparent semi-reflective film in the second direction is equal to an orthographic area of the reflective polarizing film in the second direction.

6. The VR optical system according to claim 4, wherein orthographic projection areas of the semi-transparent semi-reflective film and the reflective polarizing film in the first direction are equal to a light-emitting area of the first light-emitting component;
orthographic projection areas of the semi-transparent semi-reflective film and the reflective polarizing film in the second direction are equal to a light-emitting area of the second light-emitting component.

7. The VR optical system according to claim 2, wherein the phase delay reflection module comprises a phase delayer and a third lens arranged at an interval with the phase delayer, and the phase delayer is arranged between the third lens and the optical path beam-combining module;
an optical surface of the third lens away from the phase delayer is provided with a reflective film for reflecting light beams, which are emitted by the phase delayer to the third lens, back to the phase delayer.

8. The VR optical system according to claim 7, wherein the third lens comprises a first optical surface and a second optical surface, and the first optical surface and the second optical surface are parallel to an optical surface of the phase delayer; wherein, an optical surface of the third lens close to the phase delayer is the first optical surface, an optical surface far of the third lens away from the phase delayer is the second optical surface, the second optical surface is provided with a reflective film, and the third lens is used to amplify an optical image emitted through the phase delayer and reflect it back to the phase delayer.

9. The VR optical system according to claim 7, wherein the reflective film is a reflective coating.

10. The VR optical system according to claim 2, wherein the phase delay reflection module comprises a phase delayer arranged on one side of the optical path beam-combining module and a reflective film attached to an optical surface of the phase delayer far away from the optical path beam-combining module.

11. The VR optical system according to claim 10, wherein the phase delayer comprises a third optical surface and a fourth optical surface which are parallel to each other, the third optical surface is close to the optical path beam-combining module, the fourth optical surface is far away from the optical path beam-combining module, and the fourth optical surface is provided with a reflective film for reflecting the optical image, which has been changed by the phase delayer, back to the optical path beam-combining module.

12. The VR optical system according to claim 10, wherein the reflective film is a reflective coating.

13. The VR optical system according to claim 1, wherein when a light polarization direction of the first light-emitting component is perpendicular to a light polarization direction of the second light-emitting component, the optical path folding module is a polarizing beam splitting film arranged along an angular bisector of the first included angle;
a transmission axis of the polarizing beam splitting film is parallel to the light polarization direction of the first light-emitting component.

14. The VR optical system according to claim 1, wherein when a light polarization direction of the first light-emitting component is perpendicular to a light polarization direction of the second light-emitting component, the optical path folding module is a polarizing beam splitting film arranged along an angular bisector of the first included angle;
a transmission axis of the polarizing light splitting film is parallel to the light polarization direction of the second light-emitting component.

15. The VR optical system according to claim 1, wherein the first light-emitting component comprises a first light-emitting surface and a first lens parallel to the first light-emitting surface, which are sequentially arranged along the first direction;
the second light-emitting component comprises a second light-emitting surface and a second lens parallel to the second light-emitting surface, which are sequentially arranged along the second direction.

16. The VR optical system according to claim 15, wherein the first lens is a double-sided convex lens; the second lens is a double-sided convex lens.

17. The VR optical system according to claim 15, wherein the first light-emitting surface is a straight surface; the second light-emitting surface is a straight surface.

18. The VR optical system according to claim 1, wherein a fourth lens is arranged between the optical path folding module and the imaging region, and the first optical image and the second optical image are transmitted through the fourth lens and then reach the imaging region.

19. The VR optical system according to claim 1, wherein the fourth lens is parallel to an imaging plane formed by the imaging region, and is used to amplify the first optical image and the second optical image emitted to imaging region.

20. The VR optical system according to claim 1, wherein the first included angle is greater than 0° and less than 180°, and the second included angle is greater than 0° and less than 180°.
